# EUROPÄISCHE PATENTSCHRIFT

(11) **EP 2 135 149 B1**
(45) Veröffentlichungstag und Bekanntmachung des Hinweises auf die Patenterteilung: **31.08.2011**
(21) Anmeldenummer: 08715568.5
(22) Anmeldetag: 04.03.2008
(51) Int. Cl.: G05D 23/19

(54) **STEUEREINHEIT FÜR HEIZUNGEN**
CONTROL UNIT FOR HEATERS
UNITÉ DE COMMANDE POUR SYSTÈMES DE CHAUFFAGE

(30) Priorität: 06.03.2007 DE 102007011196
(43) Veröffentlichungstag der Anmeldung: 23.12.2009
(73) Patentinhaber: Danfoss A/S, 6430 Nordborg (DK)
(72) Erfinder: NIELSEN, Peter, Gammeljord, 7100 Vejle (DK); STEEN, Stephan, B., 7100 Vejle (DK); VRAA, Jesper, 8000 Aarhus (DK)
(74) Vertreter: Knoblauch, Andreas
(86) Internationale Anmeldenummer: PCT/DK2008/000089
(87) Internationale Veröffentlichungsnummer: WO 2008/106972

(56) Entgegenhaltungen:
- EP-A- 0 866 396
- EP-A- 1 033 641
- WO-A-2005/057307
- DE-A1- 3 438 196
- DE-A1- 19 840 552

## Beschreibung

Die Erfindung betrifft eine Steuereinheit zur zeitabhängigen Steuerung einer Heizungs- und/oder Klimaanlage mit mindestens einer Eingabeeinheit und mindestens einer Ausgabeeinheit gemäß dem Oberbegriff von Anspruch 1.

Moderne Heizungssteuerungen weisen eine große Vielfalt an unterschiedlichen Funktionen und Einstellmöglichkeiten auf. So sind bei heutigen Heizungssteuereinheiten nicht nur Funktionen vorgesehen, die den über die Jahre gestiegenen Komfortansprüchen Rechnung tragen sollen. Vielmehr beruhen viele zwischenzeitlich erwünschte Steuerungsfunktionen auf Umwelt- und Wirtschaftlichkeitserwägungen.

So ist bei heute üblichen Heizungssteuerungen neben einer inzwischen als selbstverständlich vorausgesetzten Thermostatfunktion eine sogenannte Nachtabsenkung üblich. Zu gewissen Zeitintervallen, welche mit gewissen Einschränkungen vom Benutzer selbst festgelegt werden können, wird beispielsweise die Wohnraumtemperatur nachts von 21°C auf 18°C abgesenkt. Durch die Nachtabsenkung, von im Beispiel 3°C, kann eine nicht unerhebliche Menge an Heizenergie eingespart werden, ohne dass dies für den Benutzer einen Komfortverlust mit sich brächte.

In Weiterentwicklung des Gedankens der Nachtabsenkung wurde zwischenzeitlich auch vorgeschlagen, ganz allgemein zu typischen Abwesenheitszeiten der Bewohner eine Temperaturabsenkung durchzuführen, beispielsweise zu üblichen Arbeitszeiten. Dies erfordert jedoch in der Regel eine unterschiedliche Behandlung verschiedener Wochentage, speziell von Arbeitstagen und Wochenendtagen. Denn es würde als störend empfunden werden, wenn auch an Wochenenden tagsüber eine Temperaturabsenkung stattfinden würde.

Selbstverständlich ist es bei den bereits beschriebenen Nacht- bzw. Tagestemperaturabsenkungen weiterhin unverzichtbar, dass die entsprechenden Temperaturen und Zeiten individuell eingestellt werden können.

Zwar sind derartige Heizungssteuerungen mit heute verfügbaren elektronischen Schaltungen leicht realisierbar, jedoch führt die große Vielfalt an unterschiedlichen Einstellmöglichkeiten zu einer entsprechend komplexen Bedienung der Heizungssteuerung. Gerade ältere Menschen tun sich mit der großen Vielfalt an Funktionen heutiger Heizungssteuerungen schwer. Oftmals wird daher von den von der Heizungssteuerung zur Verfügung gestellten Funktionen nur ein geringer Teil in Anspruch genommen.

Um bei Heizungssteuerungen gleichzeitig eine große Vielfalt an Einstellmöglichkeiten zur Verfügung zu stellen und dennoch eine möglichst einfache, intuitive Bedienung zu ermöglichen, wurden bereits unterschiedliche Maßnahmen vorgeschlagen.

So wird in US 7,028,912 B1 ein programmierbarer Thermostat beschrieben, der in einem Normal-Einstellmodus sowie einem vereinfachten Einstellmodus betrieben werden kann. Im Normalmodus des programmierbaren Thermo-stats können über eine Benutzerführung mit unterschiedlichen Menüebenen sämtliche Einstellmöglichkeiten des Thermostats programmiert werden. Die Bedienung ist in diesem Modus entsprechend komplex. Um beispielsweise älteren Personen eine einfache Bedienung des programmierbaren Thermostats zu ermöglichen, wird daher vorgeschlagen, dass das programmierbare Thermostat vom Normaleinstellmodus in den vereinfachten Einstellmodus umgestellt werden kann. Im vereinfachten Modus stehen gegenüber dem Normalmodus weniger Funktionen zur Verfügung, was die Menge an darzustellenden Optionen verringert und dadurch die Bedienung erleichtert. Da in diesem Modus nicht sämtliche Einstellmöglichkeiten des programmierbaren Thermostats ausgenutzt werden können, ist darüber hinaus vorgesehen, das programmierbare Thermostat vom vereinfachten Einstellmodus zurück in den normalen Einstellmodus umzuschalten.

Zwar kann das in US 7,028,912 B1 beschriebene Thermostat im vereinfachten Einstellmodus relativ einfach bedient werden, die dann gegebene einfache Bedienung wird jedoch dadurch erkauft, dass in diesem Modus nur eine eingeschränkte Funktionalität des programmierbaren Thermostats möglich ist. Um die volle Funktionenvielfalt des programmierbaren Thermostats auszuschöpfen, ist ein erneuter Übergang in den entsprechend komplex zu bedienenden normalen Einstellmodus unabdingbar. Die eingestellte Temperatur und Zeit wird in Form von Zahlen angegeben.

In US 2004/0245352 A1 wird ein weiteres programmierbares Thermostat vorgeschlagen. Bei dem dort beschriebenen Thermostat können für jeden Wochentag einzeln bis zu vier unterschiedliche Intervalle mit individuell einstellbaren Temperaturwerten programmiert werden. Die entsprechenden Zeitintervalle sind in 15-Minuten-Schritten frei programmierbar. Um den Programmieraufwand für eine gesamte Woche zu erleichtern, ist darüber hinaus vorgesehen, dass eine Tagesprogrammierung (beispielsweise Montag) auf einen anderen Wochentag (beispielsweise Dienstag) kopiert werden kann. Anschließend ist eine Nachbearbeitung der Daten möglich.

Die Programmierung beziehungsweise Anzeige der einzelnen, programmierten Intervalle erfolgt in zahlen- bzw. buchstabenmäßiger Form einzeln für jedes Intervall. Die Programmierung ist entsprechend komplex, und auch die Übersichtlichkeit der Darstellung ist entsprechend unbefriedigend.

WO 2005/057307 A1 zeigt verschiedene Möglichkeiten zur Anzeige von Programmen an einer Steuereinheit für Heizungs- und/oder Klimaanlagen. Eine erste Möglichkeit besteht darin, sich verschiedene Werte, wie Uhrzeit für bestimmte Ereignisse oder Sollwerte, numerisch anzeigen zu lassen. In diesem Fall können sie bei Bedarf durch Druck auf Tasten oder Schaltflächen verändert werden. Eine zweite Möglichkeit besteht darin, eine Tabelle anzuzeigen, in der die Tage der Woche und für jeden Tag verschiedene Heiz- oder Kühlphasen mit ihren Sollwerten angezeigt werden. Man kann dann bestimmte Sollwerte gruppenweise verändern. Eine dritte Möglichkeit besteht darin, sich für jeden Tag die Heiz- und/oder Kühlphasen durch balkenartige Verläufe anzeigen zu lassen. Wenn Startzeitpunkte von Heiz- oder Kühlphasen geändert werden, dann ändern sich auch die Länge und die Position der Balken.

EP 0 866 396 A1 zeigt eine Vorrichtung zur Anzeige eines Sollwerts. Es werden Sollwerte zu verschiedenen Zeitpunkten mit einer Art Balkendiagramm angezeigt. Durch eine Zeitauswahl kann man eine Einfügemarke von einem Zeitpunkt zu einem anderen verschieben und damit den neuen Sollwert auswählen. Durch Betätigung eines Sollwertgebers kann man dann den ausgewählten Sollwert verändern.

Die Aufgabe der Erfindung besteht darin, bei einer Steuereinheit zur zeitabhängigen Steuerung einer Heizungs- und/oder Klimaanlage eine einfache und übersichtliche Programmierung zur Verfügung zu stellen. Eine Steuereinheit mit den Merkmalen des Anspruchs 1 löst diese Aufgabe.

Dazu wird vorgeschlagen, bei einer Steuereinheit zur zeitabhängigen Steuerung einer Heizungs- und/oder Klimaanlage mit mindestens einer Eingabeeinheit und mindestens einer Ausgabeeinheit, bei der wenigstens eine Eingabeeinheit ein Schaltintervalleingabemittel zur Hinzufügung, Änderung und/oder Löschung von zeitabhängigen Schaltintervallen aufweist, nach deren Ablauf sich jeweils ein Schaltzustand der Heizungs- und/oder Klimaanlage ändert, wenigstens eine Ausgabeeinheit mit einem Schaltintervalldarstellungsmittel zu versehen, welches auf der Ausgabeeinheit zumindest zeitweise eine schematisierte, grafische Darstellung der zeitabhängigen Schaltintervalle darstellt. Wenigstens ein Schaltintervalleingabemittel ist als pfeilartiges, vorzugsweise als doppelpfeilartiges Schaltintervalländerungsmittel ausgebildet. Der Pfeil kann dabei die Richtung symbolisieren, in die eine Veränderung erfolgen soll. Ist der Pfeil beispielsweise an der Grenze zwischen zwei unterschiedlichen Schaltintervallen dargestellt, so kann durch Druck auf den entsprechenden Pfeil die Grenze (z.B. Umschaltzeit) in die entsprechende Richtung verschoben werden. Eine derartige Eingabemöglichkeit kann sich als besonders einfach und intuitiv erweisen.

Derartige schematisierte, grafische Darstellungen können deutlich schneller und intuitiver erfasst werden, als beispielsweise Zahlenangaben, die normalerweise zunächst gelesen, verstanden und interpretiert werden müssen. Zwar kann das Problem auftauchen, dass die schematisierten, grafischen Darstellungen die zugrunde liegenden Informationen weniger genau darstellen. Diesem Nachteil kann jedoch dadurch begegnet werden, dass zusätzlich zur grafischen Darstellung auch eine Zahlenangabe erfolgt. Diese Zahlenangabe kann entweder gleichzeitig zur grafischen Darstellung ausgegeben werden und/oder in einem gesonderten Darstellmodus oder in einem gesonderten Darstellungsbereich dargestellt werden. In jedem Fall kann die schnelle und intuitive Erkennbarkeit durch die schematisierte, grafische Darstellung gefördert werden.

Als schematisierte, grafische Darstellung kommen unterschiedliche Darstellungsformen in Betracht. Beispielsweise kommen für die Darstellung eines Tages zwei nebeneinander liegende 12-Stunden-Zifferblättet oder aber auch ein einzelnes 24-Stunden-Zifferblatt in Betracht. Als vorteilhaft hat es sich jedoch erwiesen, wenn die schematisierte, grafische Darstellung wenigstens einen balkenartigen Darstellungsmodus umfasst. Die darzustellenden Zeitinformationen werden in diesem Fall in Form eines oder mehrerer, balkenartiger Anzeigeelemente dargestellt, wobei die Längsrichtung eines Balkens der fortschreitenden Zeit entsprechen kann. Beispielsweise kann ein Balken einen Tag (also 24 Stunden) symbolisieren. Die balkenartige Darstellungsform kann sich als besonders Platz sparend und dennoch übersichtlich gestalten. Insbesondere tritt die bei kreisrunden Darstellungen übliche Verwirrung, ob es sich um einen 12- oder 24-Stunden-Vollkreis handelt, nicht auf.

Vorteilhaft ist es, wenn die grafische Darstellung eine Kodierung unterschiedlicher Schaltintervallzustände mittels verschiedener Farben und/ oder mittels einem quer zur Zeitanzeigerichtung verlaufenden Versatz aufweist. Beispielsweise kommt hier Rot für eine wärmere und Blau oder Orange für eine kältere Temperatur in Betracht. Auch können beispielsweise drei Temperaturstufen mit den Farben Rot, Orange und Blau dargestellt werden. Dabei kann - muss aber nicht - eine die Farben erläuternde Skala zeitgleich oder nach einem Umschaltvorgang auf der Anzeigeeinrichtung dargestellt werden. Bei einem quer zur Zeitanzeigeeinrichtung verlaufenden Versatz kann es sich beispielsweise im Falle einer balkenartigen Darstellung um einen Teilbalken handeln, der oberhalb beziehungsweise unterhalb einer Mittellinie der balkenartigen Darstellung dargestellt wird. Dieser kann sowohl durchgängig, als auch mit einer Struktur versehen dargestellt werden. So kann ein Skalenteil für eine gewisse Zeitdauer (beispielsweise eine Stunde) stehen. Selbstverständlich können auf diese Art auch drei oder mehr Temperaturstufen dargestellt werden. Eine besonders vorteilhafte Darstellungsweise ergibt sich bei einer Kombination aus Farben und seitlichem Versatz. Dabei kann die Information besonders übersichtlich dargestellt werden, aber auch von Farbenblinden interpretiert werden.

Vorzugsweise umfasst die grafische Darstellung die Darstellung unterschiedlicher Tage, insbesondere unterschiedlicher Wochentage. Beispielsweise können durch die Darstellung von sieben Teilbereichen sämtliche Tage der Woche mitsamt den jeweils aktuell programmierten tagesabhängigen Schaltintervallen übersichtlich und intuitiv erkennbar dargestellt werden. Denkbar ist es auch, dass lediglich die Arbeitstage und/oder die Wochenendtage dargestellt werden.

Vorzugsweise umfasst das Schaltintervalldarstellungsmittel wenigstens zwei unterschiedliche Darstellungsmodi, nämlich zumindest einen Übersichtsmodus und zumindest einen Bearbeitungsmodus. Die Darstellungsmodi können sich bezüglich der Menge der dargestellten Information (beispielsweise der Menge der Wochentage) und/oder bezüglich des Vorhandenseins beziehungsweise der Anzahl von Zusatzinformationen (beispielsweise Uhrzeitangaben in Zahlenform) und/oder von Einstellmöglichkeiten unterscheiden. Denkbar ist beispielsweise, dass in einer Übersichtsdarstellung die gesamte Woche mit sämtlichen Wochentagen schematisch dargestellt wird. Eine genauere Anzeige beziehungsweise eine Bearbeitungsmöglichkeit einzelner Wochentage und der mit diesen verknüpften Schaltintervalle kann in dem Bearbeitungsmodus erfolgen. Im Bearbeitungsmodus können beispielsweise Schaltflächen dargestellt werden, mit denen die Schaltintervalle verändert werden können. Vorzugsweise ist in beiden Darstellungsmodi eine grafische Darstellung der Schaltintervallzustände vorgesehen.

Eine nochmals verbesserte Bedienbarkeit ergibt sich, wenn im Bearbeitungsmodus ein Abfragemittel zur Bestätigung beziehungsweise zum Verwerfen einer erfolgten Eingabe vorgesehen ist. Wenn beispielsweise versehentlich eine unerwünschte Eingabe erfolgt ist, kann diese durch Anwählen von "Verwerfen" verworfen werden und die vorherige Programmierung aufrecht erhalten werden. Selbstverständlich können statt der Begriffe "Bestätigung" und "Verwerfen" auch andere Begriffe und/oder geeignete Symbole dargestellt werden.

Weiterhin kann es sich als vorteilhaft erweisen, wenn die Eingabeeinheit ein Wochentagsauswahlmittel umfasst. Insbesondere kann das Wochentagsauswahlmittel in Zusammenhang mit einem Bearbeitungsmodus vorgesehen werden. Vorzugsweise ist das Wochentagsauswahlmittel durch eine grafische Teildarstellung unterstützt. Denkbar ist es beispielsweise, dass für die unterschiedlichen Wochentage tastenartige Schaltflächen vorgesehen werden, wobei die Verknüpfung mit dem jeweiligen Wochentag durch das Anzeigen beziehungsweise das Fehlen eines Hakens oder Kreuzes dargestellt ist. Durch ein derartiges Wochentagsauswahlmittel kann eine besonders schnelle, einfache und intuitive Programmierung einer gesamten Woche erfolgen.

Weiterhin wird vorgeschlagen, dass wenigstens eine Eingabeeinheit zumindest ein Schaltintervallhinzufügemittel und/oder zumindest ein Schaltintervalllöschmittel aufweist. Durch eine solche Ausbildung kann der Benutzer der Steuereinheit eine im Wesentlichen beliebige Anzahl an unterschiedlichen Schaltintervallen festlegen. Er ist somit nicht auf eine gewisse, fix vorgegebene Anzahl von Schaltintervallen (beispielsweise 4) festgelegt. Eine besonders flexible Anwendbarkeit der Steuereinheit wird dadurch nochmals gefördert.

Von Vorteil ist es, wenn zumindest zwei unterschiedliche Temperaturniveaus eingegeben werden können. Es kann also nicht nur zwischen einem Schaltintervallzustand, bei dem die Heizung eingeschaltet und die Temperatur überwacht wird und einem Schaltintervallzustand, bei dem die Heizung ausgeschaltet ist, unterschieden werden. Vielmehr können zwei oder mehr unterschiedliche Temperaturniveaus vorgegeben werden, die jeweils thermostatisch überwacht werden.

Vorteilhaft ist es, wenn zumindest eine Ausgabeeinheit als Matrixdisplay, insbesondere als LCD- oder TFT-Anzeige ausgebildet ist. Auf derartigen Anzeigen können die unterschiedlichsten Darstellungszustände besonders leicht dargestellt werden, ohne dass auf Displayvorgaben geachtet werden müsste. Zwischenzeitlich sind solche Ausgabeeinheiten auch kostengünstig erhältlich und weisen darüber hinaus eine relativ geringe Stromaufnahme auf.

Von Vorteil ist es weiterhin, wenn wenigstens eine Eingabeeinheit und wenigstens eine Ausgabeeinheit zusammenfallen, und insbesondere als Touchscreen ausgebildet sind. In diesem Fall kann die Eingabe interaktiv mit der dargestellten Aufgabeinformation abgeändert werden. Dadurch kann eine besonders einfache, intuitive Bedienung weiter gefördert werden.

Im Folgenden wird die Erfindung unter Bezugnahme auf die beigefügte Zeichnung näher erläutert. Es zeigen:
- Fig. 1: eine Heizungsregelung für einen Einzel- raum in schematischer Ansicht;
- Fig. 2: eine Heizungsregelung für mehrere Räume in sche- matischer Ansicht;
- Fig. 3: eine Ruhezustandsanzeige einer Heizungssteuerung;
- Fig. 4: ein Hauptmenü einer Heizungssteuerung;
- Fig. 5a, 5b: ein Auswahlmenü einer Heizungssteuerung;
- Fig. 6: ein Wochentagsauswahlmenü einer Heizungssteue- rung;
- Fig. 7: ein Tagesintervalländerungsmenü einer Heizungsan- lage;
- Fig. 8: ein Intervallhinzufügemenü einer Heizungsanlage;
- Fig. 9: ein Intervalllöschmenü einer Heizungssteuereinheit;
- Fig. 10: eine Bestätigungsanzeige des in Fig. 7 dargestellten Tagesintervalländerungsmenüs;
- Fig. 11: eine Abbruchsanzeige des in Fig. 7 dargestellten Ta- gesintervalländerungsmenüs;
- Fig. 12: ein Temperatureinstellmenü einer Heizungssteuerein- heit.

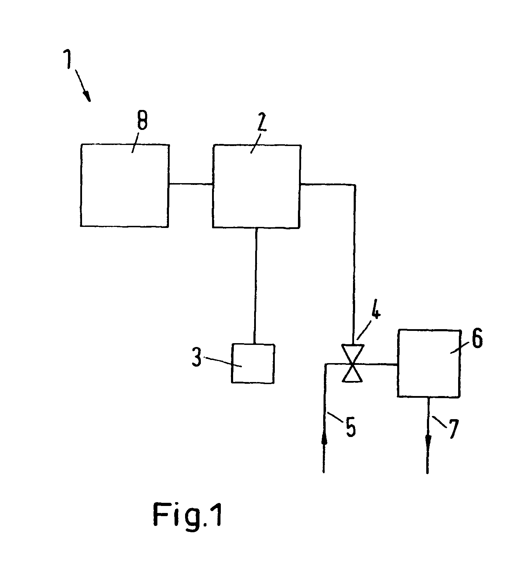

In Fig. 1 ist schematisch ein Heizsystem zur Beheizung eines Raums dargestellt. Das Heizsystem weist eine Heizungssteuerung 2 auf, welche eine Eingangsschnittstelle zu einem Temperatursensor 3 aufweist. Die vom Temperatursensor 3 gelieferten Daten werden in der Heizungssteuerung 2 mit einem Sollwert verglichen. In Abhängigkeit vom Ergebnis des Vergleichs von Soll- und Istwert steuert die Heizungssteuerung 2 ein Ventil 4 an, welches den Vorlauf 5 zu einem im Raum angebrachten Heizkörper 6 öffnet. Dadurch dass der Heizkörper 6 mit dem Warmwasserkreislauf einer hier nicht näher dargestellten Zentralheizungsanlage verbunden ist, kann er Wärme an den Raum abgeben, und so den Raum heizen.

Damit die Raumtemperatur nach den individuellen Wünschen eines Benutzers geändert werden kann, ist die Heizungssteuerung 2 mit einer Eingabe-/Ausgabeeinheit 8 verbunden. Mit Hilfe dieser Eingabe-/Ausgabeeinheit 8 kann die Heizungssteuerung 2 vom Benutzer nach Wunsch programmiert werden.

Im in Fig. 1 dargestellten Ausführungsbeispiel sind die dargestellten Komponenten des Heizsystems 1 im selben Raum angeordnet. Es ist selbstverständlich denkbar, dass die Heizungssteuerung 2 mit einer zentralen Steuerung oder mit anderen Heizungssteuerungen in anderen Räumen kommuniziert, beispielsweise über einen Datenbus.

Beim heutigen Stand der Mikroelektronik ist es selbstverständlich auch denkbar, dass mehrere Komponenten zu einer baulichen Einheit zusammengefasst werden. Beispielsweise ist es denkbar, dass Heizungssteuerung, Ein-/Ausgabeeinheit 8 und/oder Temperatursensor 3 in einem einzelnen Gehäuse aufgenommen sind.

Ebenso denkbar ist es, dass statt eines klassischen Heizkörpers 6 auch eine Fußbodenheizung oder eine direkte Luftheizung genutzt wird. Natürlich ist es auch möglich, dass anstatt eines Anschlusses 5, 7 an eine klassische, wasserbasierte Zentralheizungsanlage auch ein Anschluss an Fernwärme oder eine Heizung mit elektrischem Strom erfolgt.

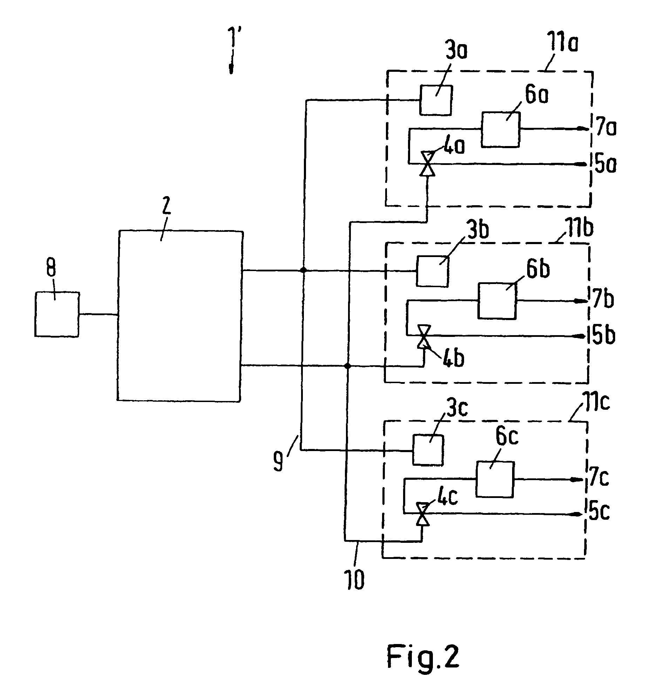

Denkbar ist selbstverständlich auch ein Aufbau eines Heizsystems 1', wie es in Fig. 2 dargestellt ist. Dort ist eine einzelne Heizungssteuerung 2 vorgesehen, welche die Temperaturregelung einer Mehrzahl von Räumen 11 a, 11 b, 11 c (durch gestrichelte Linien angedeutet), übernimmt. Dazu ist die Heizungssteuerung 2 jeweils mit einem, im entsprechenden Raum 11 a, 11 b, 11 c angeordneten Temperatursensor 3a, 3b, 3c verbunden. Die Verbindung zwischen Heizungssteuerung 2 und Temperatursensoren 3a, 3b, 3c kann durch einzelne Leitungen, oder aber auch, wie in Fig. 2 dargestellt, über einen Datenbus 9 erfolgen. In Abhängigkeit der Sensordaten 3a, 3b, 3c steuert die Heizungssteuerung 2 Ventile 4a, 4b, 4c an, so dass die in den einzelnen Räumen 11 a, 11 b, 11 c angeordneten Heizkörper 6a, 6b, 6c Wärme abgeben. Auch die Kommunikation zwischen Heizungssteuerung 2 und Ventilen 4a, 4b, 4c erfolgt im in Fig. 2 dargestellten Ausführungsbeispiel über einen Datenbus 10. Sie kann aber auch auf andere Weise erfolgen. Insbesondere kann die Kommunikation auch drahtlos erfolgen. Auch für die Kommunikation mehrerer Heizungssteuerungen 2 untereinander bzw. deren Kommunikation mit Eingabe-/Ausgabeeinheiten 8 ist an eine drahtlose Kommunikation zu denken.

Mit der Heizungssteuerung 2 ist eine Eingabe-/Ausgabe-einheit 8 verbunden, über die die Programmierung der einzelnen Räume erfolgen kann. Auch hier ist es denkbar, dass Heizungssteuerung 2 und die Ein-/Ausgabeeinheit 8 zusammenfallen. Auch kann eine einzelne, zentrale Heizungssteuerung 2 mehrere Eingabe-/Ausgabeeinhei-ten aufweisen.

Sowohl bei dem in Fig. 1, als auch bei dem in Fig. 2 dargestellten Ausführungsbeispiel ist die Ein-/Aus-gabeeinheit als farbiges Matrix-TFT-Display ausgeführt. Dabei ist das Display ein Touchscreen, also ein berührungsempfindlicher Bildschirm. Normalerweise befindet sich das Display in einem abgedunkelten Zustand, damit es insbesondere in dunklen Räumen (beispielsweise nachts) nicht stört. Auch an eine Helligkeitsanpassung mit Hilfe eines Lichtsensors ist zu denken. Nachdem das Display berührt wurde, wird das Display in einen helleren Zustand geschaltet, damit es besser erkennbar ist. Erst wenn über eine gewisse Zeit hinweg (beispielsweise 1 oder 2 Minuten) das Display nicht mehr berührt wurde, schaltet es in den abgedunkelten Zustand zurück. Dabei kann der Abdunklungsvorgang schlagartig oder sukzessiv (dimmend) erfolgen.

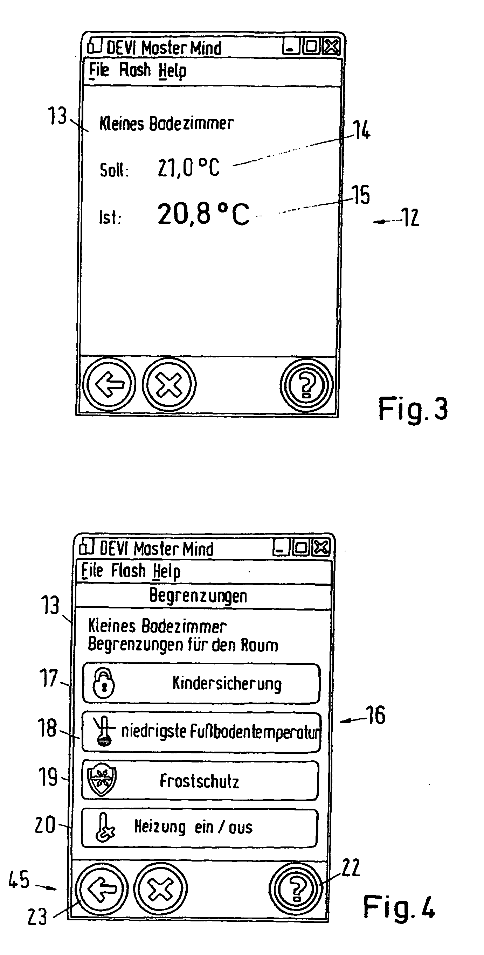

In den Fig. 3 bis 12 werden unterschiedliche Schirmbilder dargestellt, anhand derer die komfortable und intuitive Bedienung der Ein-/Ausgabeeinheit 8 näher erläutert wird. Selbstverständlich sind hier Abwandlungen, insbesondere hinsichtlich des genauen Aussehens der Menüs möglich. Es sind auch weitere, vorliegend nicht dargestellte, Menüpunkte denkbar.

Fig. 3 zeigt eine mögliche Ruhezustandszeige der Ein-/Ausgabeeinheit 8. Die Ruhezustandsanzeige 12 erfolgt üblicherweise abgedunkelt. Es ist aber auch möglich, dass zu gewissen Zeiten die Ruhezustandsanzeige 12 leuchtet. Bei der Ruhezustandsanzeige ist eine Rauminformation angegeben, die den von der Heizungssteuerung 2 gesteuerten Raum 11 spezifiziert. Dies ist insbesondere bei einer Steuerung gemäß Fig. 2 sinnvoll. Sie kann aber auch beim in Fig. 1 dargestellten Ausführungsbeispiel von Vorteil sein, insbesondere wenn eine Datenverbindung zu weiteren Steuereinheiten beziehungsweise zu einer zentralen Steuereinheit besteht. Dadurch könnte beispielsweise von einem ersten Raum aus ein zweiter Raum überwacht und gegebenenfalls auch gesteuert werden.

Neben der Raumbezeichnung 13 sind zwei Temperaturwerte 14, 15 dargestellt, nämlich eine Solltemperatur 14 sowie eine Isttemperatur 15. Vorzugsweise ist die Isttemperatur 15 größer oder auf andere Weise hervorgehoben dargestellt. Der Benutzer kann somit der Ruhezustandsanzeige 12 die wichtigsten Werte entnehmen. Wenn ihm beispielsweise zu kalt ist, kann er durch einen Vergleich von Soll- 14 und Isttemperatur 15 erkennen, ob er die Einstellung der Heizungändern muss. So ist es denkbar, dass die Heizungsanlage erst vor wenigen Minuten von einer abgesenkten Raumtemperatur (beispiels-weise 18°C) auf eine erhöhte Soll-KomfortTemperatur (beispielsweise 21°C) geschaltet hat. Die Isttemperatur 15 folgt der Solltemperatur 14 mit einer gewissen Zeitverzögerung. Hat der Benutzer Kenntnis über Soll- 14 und Isttemperatur 15, kann er einen solchen temporären Zustand erkennen.

Berührt der Benutzer den im Ruhezustand 12 befindlichen Bildschirm, so schaltet die Anzeige auf das Hauptmenü 16 um. Auch hier wird die Raumbezeichnung 13 angezeigt. Das Hauptmenü 16 stellt dem Benutzer unterschiedliche Optionen zur Verfügung. Im in Fig. 4 dargestellten Beispiel kann der Benutzer zwischen unterschiedlichen Optionen 17, 18, 19, 20 wählen, mit denen er die jeweiligen Funktionen programmieren kann. Zur Wahl steht im dargestellten Hauptmenü 16 eine Kindersicherung 17, eine nicht zu unterschreitende Minimaltemperatur 18, ein Frostschutzzustand 19 und eine Temperaturprogrammierung 20. Durch Berühren der Raumbezeichnung 13 kann der Benutzer darüber hinaus (insbesondere bei der in Fig. 2 dargestellten Heizungsanlage) zu einem Auswahlmenü gelangen, mit dem er zwischen den unterschiedlichen, zur Verfügung stehenden Räumen umschalten kann.

Weiterhin ist im unteren Bildschirm eine Statusleiste 45 dargestellt. Vorliegend kann man eine Rücksprungfunktion 23 anwählen, mit der man zum Ruhezustand zurückkehrt. Durch Anwählen der Hilfefunktion 22 werden entsprechende Informationstexte dargestellt.

Im Folgenden wird die Zeit-/ Temperaturprogrammierung 20 näher erläutert. Diese erreicht man durch einen Druck auf die entsprechende Schaltfläche 20.

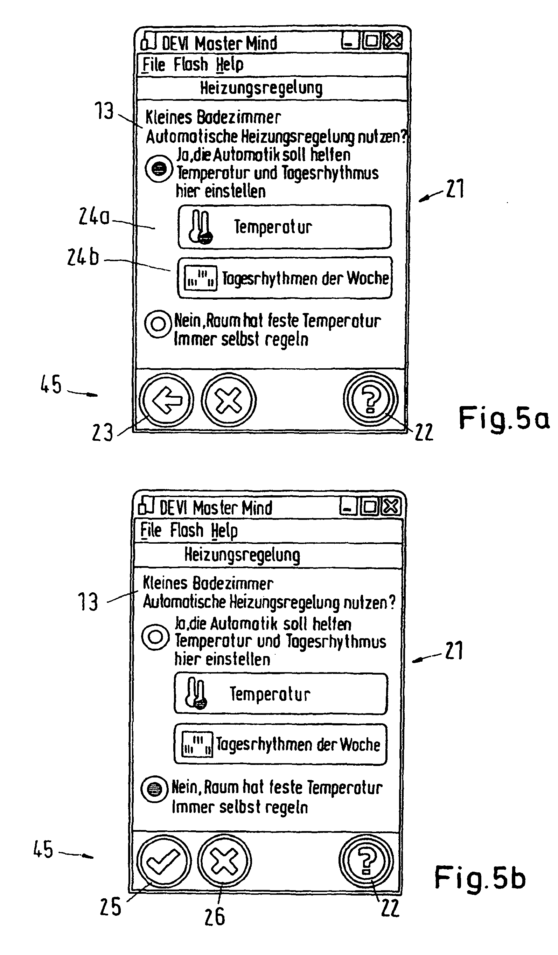

Nach Anwahl der Zeit-/Temperaturprogrammierungsschaltfläche 20, gelangt der Benutzer zum in Fig. 5 dargestellten Auswahlmenü 21. Im Auswahlmenü 21 kann sich der Benutzer zwischen einer durch eine Automatikfunktion unterstützten Eingabe (in Fig. 5a angewählt) und einer Eingabevariante, bei der er die Programmierung vollständig selbst übernimmt (in Fig. 5b dargestellt) entscheiden. In Abhängigkeit von der im Auswahlmenü 21 getroffenen Auswahl wird eine unterschiedliche Statusanzeige 45 am unteren Rand des Bildschirms dargestellt.

Bei der ersten Auswahlmöglichkeit gemäß Fig. 5a kann der Benutzer neben einer Hilfefunktion 22 durch eine Anwahl der Rücksprungfunktion 23 eine Menüebene zurückspringen. Weiterhin kann er durch eine Anwahl der Schaltflächen 24a oder 24b in der Menüstruktur weiter vordringen.

Im in Fig. 5b dargestellten Zustand des Anwahlmenüs 21 steht dem Benutzer neben der Hilfefunktion 22 eine Bestätigungsfunktion 25 beziehungsweise eine Abbruchfunktion 26 zur Verfügung.

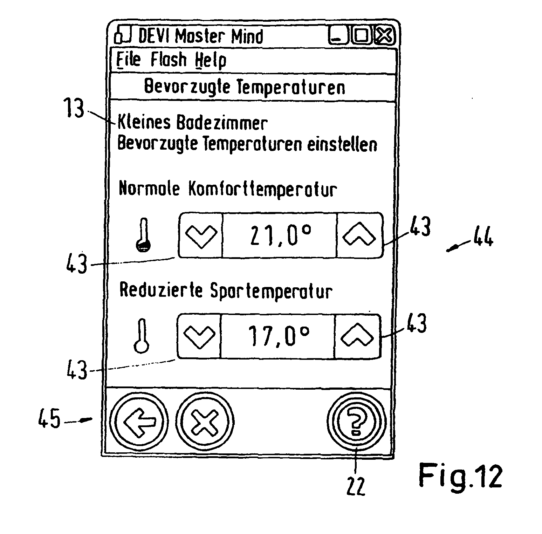

Wählt der Benutzer beispielsweise ausgehend von Fig. 5b die Bestätigungsfunktion 25, so gelangt er zu einem Menü, bei dem er eine einzelne Temperatur einstellen kann. Die Heizungssteuerung für den entsprechenden Raum entspricht dann einem klassischen Thermostat. Das entsprechende Menü hätte dann ein Aussehen, welches dem in Fig. 12 dargestellten Aussehen ähnelt. Selbstverständlich würde dabei lediglich eine einzige Temperatur dargestellt werden, die entsprechend verstellt werden kann.

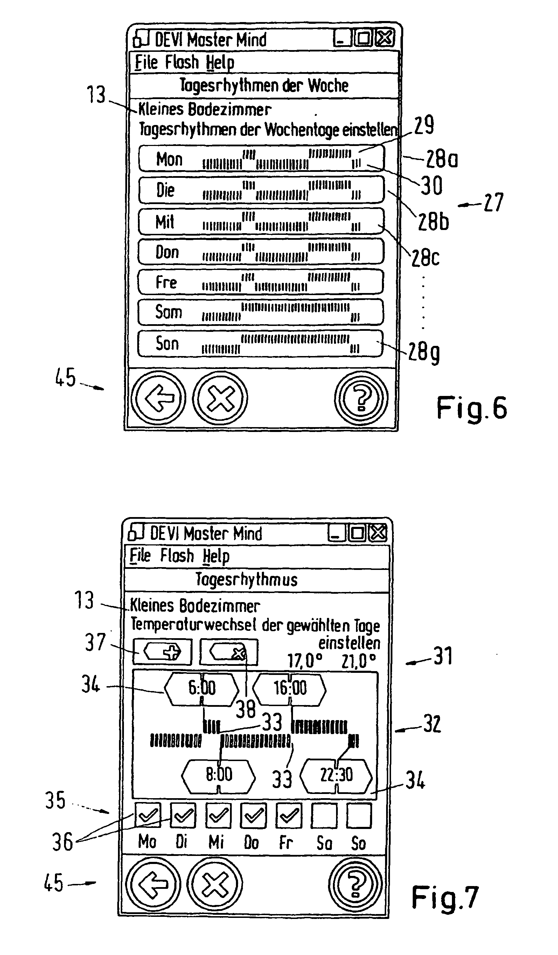

Wählt der Benutzer dagegen ausgehend von Fig. 5a die Funktion "Tagesrhythmen der Woche" 24b, so gelangt er zur in Fig. 6 dargestellten Wochenübersicht 27. Hier sind in den Wochentagszeilen 28a bis 28g für jeden Tag der Woche die jeweils gültigen Temperaturschaltintervalle grafisch dargestellt. Die jeweiligen Wochentagszeilen zeigen dabei mit ihrer jeweiligen oberen Hälfte 29 eine erhöhte Temperatur von beispielsweise 21°C an, während die untere Hälfte 30 der jeweiligen Wochentagszeile 28 für eine abgesenkte Temperatur (beispielsweise 18°C) steht. Zusätzlich kann die Information neben dem Versatz zwischen oberer Hälfte 29 und unterer Hälfte 30 auch eine Farbcodierung tragen, wie beispielsweise Rot für die höhere Temperatur und Orange für die niedrigere Temperatur.

Wählt der Benutzer in der in Fig. 6 dargestellten Wochentagsanzeige 27 eine einzelne Wochentagszeile 28 an, so gelangt er zur in Fig. 7 dargestellten Tagesanzeige 31. Bei der Tagesanzeige 31 wird der zeitabhängige Tagesablauf 32 grafisch dargestellt. Zusätzlich sind im Bereich der jeweiligen Intervallgrenzen 33, bei denen sich der Schaltzustand ändert, doppelpfeilartig ausgebildete Zusatzflächen 34 dargestellt. In den doppelpfeilartigen Zusatzflächen 34 ist einerseits die Uhrzeit, zu denen sich der Schaltzustand ändert 33, angegeben. Neben der grafischen Information, des Tagesablaufs 32, liegt somit auch eine präzisere Darstellung in Form einer Zeitangabe vor. Durch einen Druck auf eine Pfeilhälfte der Zusatzfläche 34 kann die Uhrzeit, zu der der Schaltwechsel 33 erfolgt, verändert werden. Hier kann ein Kompromiss zwischen möglichst exakter Zeitanwahl und schneller Veränderung der Schaltzeit gewählt werden. Als vorteilhaft haben sich Zeitsprünge von 5, 10 oder 15 Minuten erwiesen.

Schließlich ist im Rahmen der Tagesanzeige 31 noch eine Wochentagsauswahlleiste 35 vorgesehen. Hier ist jedem Tag der Woche eine Wochentagsauswahlfläche 36 zugeordnet. Die Wochentagsauswahlfläche 36 zeigt durch eine grafische Versinnbildlichung an, ob die in der Tagesanzeige 31 dargestellte Zeitinformation für den entsprechenden Wochentag gültig ist (vorliegend durch einen Haken symbolisiert) oder nicht (vorliegend durch eine leere Fläche veranschaulicht). Durch eine Anwahl der entsprechenden Wochentagsauswahlfläche 36 kann die in der Tagesanzeige 31 dargestellte Schaltintervallinformation für den entsprechenden Wochentag gültig oder ungültig geschaltet werden. Dank dieser Wochentagsauswahlleiste kann eine einmal programmierte Intervallinformation auf einfache, übersichtliche und intuitive Weise für unterschiedliche Wochentage gültig gemacht werden.

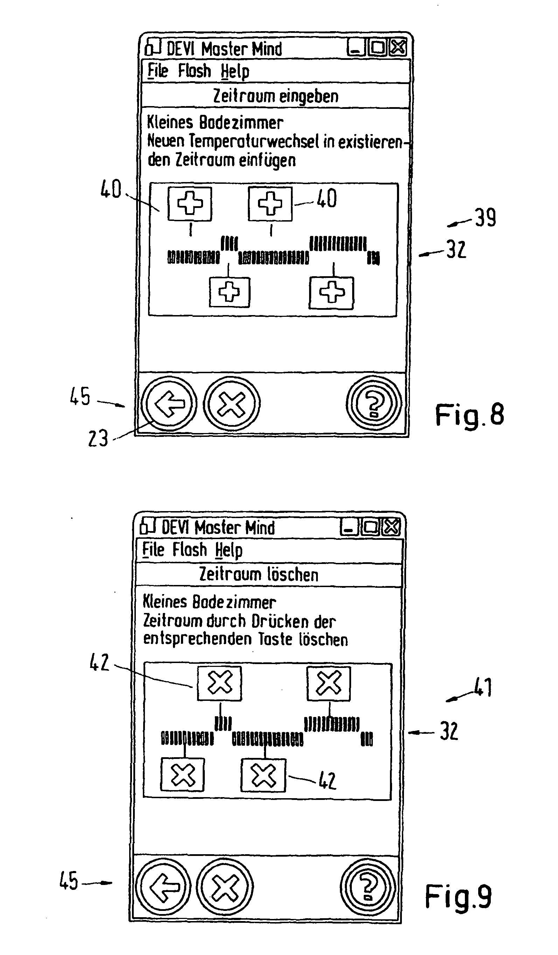

Schließlich kann bei der Tagesanzeige 31 noch eine Intervallhinzufügefunktion 37 und eine Intervalllöschfunktion 38 über entsprechende Schaltfläche ausgewählt werden. Nach Anwahl der Intervallhinzufügefunktion 37 gelangt man zum in Fig. 8 dargestellten Intervallhinzufügemenü 39. Ähnlich zur Tagesanzeige 31 wird auch im Intervallhinzufügemenü 39 der zeitabhängige Tagesablauf 32 grafisch dargestellt. Durch die Anwahl der Hinzufügeschaltflächen 40 kann im dazu korrespondierenden Zeitintervall ein zusätzliches Schaltintervall hinzugefügt werden. Dessen zeitliche Grenzen können anschließend im Rahmen der übergeordneten Tagesanzeige 31 (durch die Rücksprungfunktion 23 anwählbar) bearbeitet werden.

Bei einer Auswahl der Intervalllöschfunktion 38 bei der Tagesanzeige 31 (Fig. 7) gelangt man in analoger Weise zum Intervalllöschmenü 41. Hier kann durch Betätigen der entsprechenden Löschschaltfläche 42 das jeweils dazu korrespondierende Zeitintervall gelöscht werden.

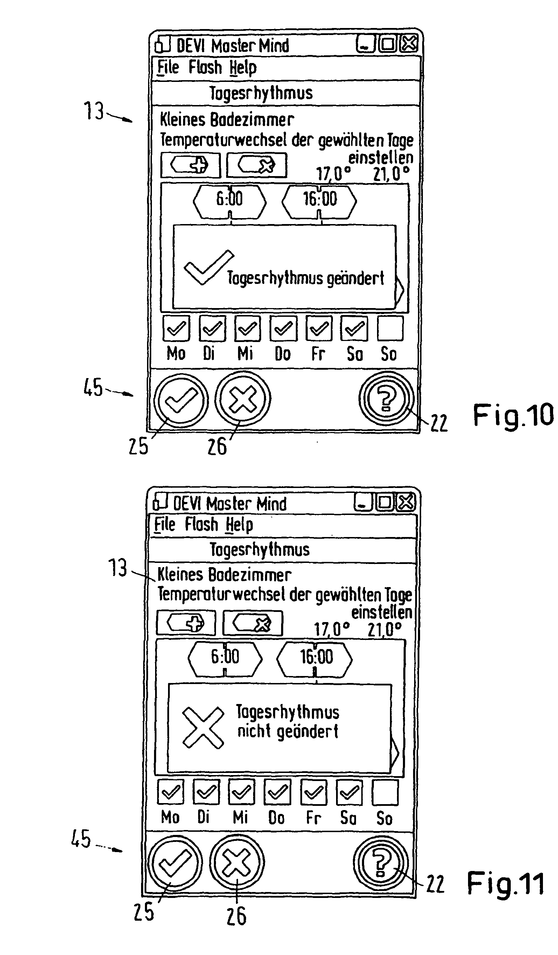

Wurden im Rahmen des Tagesmenüs 31 (Fig. 7), oder in einem dazu untergeordneten Menü (z.B. Wochentagsauswahllisten 35, Intervallhinzufügefunktion 37, Intervalllöschfunktion 38) Änderungen durchgeführt, so ändert sich die im unteren Bildschirmbereich dargestellte Statusanzeige 45 zu der in den Fig. 10 und 11 dargestellten Statusanzeige 45. Der Benutzer kann die durchgeführten Änderungen durch Anwahl der Bestätigungsfunktion 25 bestätigen beziehungsweise durch Anwahl der Abbruchfunktion 26 verwerfen. Die Bestätigung wird durch die in Fig. 10 dargestellte Anzeige bestätigt, wohingegen der Abbruch 26 durch die in Fig. 11 dargestellte Anzeige bestätigt wird.

In Fig. 12 wird schließlich noch dargestellt, wie die - vorliegend zwei - Temperaturen, nämlich die normale Komforttemperatur und die abgesenkte Energiespartemperatur individuell eingestellt werden können. Eine Veränderung der entsprechenden Temperatur ist durch eine Anwahl der entsprechenden Pfeilschaltflächen 43 möglich. Das in Fig. 12 dargestellte Temperaturauswahlmenü 44 wird beispielsweise über eine Anwahl der Schaltfläche 24b in Fig. 5a erreicht. Denkbar ist es auch, dass das Temperaturanwahlmenü 44 (auch) durch ein Berühren des zeitabhängigen Tagesablaufs 32, wie er beispielsweise im Rahmen des Tagesmenüs 31 dargestellt ist, erreicht werden kann.

### Bezugiszeichenliste

- 1, 1': Heizsystem
- 2: Heizungssteuerung
- 3: Temperatursensor
- 4: Ventil
- 5: Vorlauf
- 6: Heizkörper
- 7: Rücklauf
- 8: Eingabe-/Ausgabeeinheit
- 9, 10: Datenbus
- 11: Raum
- 12: Ruhezustandsanzeige
- 13: Raumbezeichnung
- 14: Solltemperatur
- 15: Isttemperatur
- 16: Hauptmenü
- 17: Kindersicherung
- 18: Minimaltemperatur
- 19: Frostschutz
- 20: Zeit-/Temperaturprogrammierung
- 21: Auswahlmenü
- 22: Hilfefunktion
- 23: Rücksprungfunktion
- 24a, 24b: Schaltfläche
- 25: Bestätigungsfunktion
- 26: Abbruchfunktion
- 27: Wochenübersicht
- 28: Wochentagszeile
- 29: obere Hälfte
- 30: untere Hälfte
- 31: Tagesanzeige
- 32: Tagesablauf
- 33: Intervallgrenze
- 34: Doppelpfeilschaltfläche
- 35: Wochentagsauswahlleiste
- 36: Wochentagsauswahlfläche
- 37: Intervallhinzufügefunktion
- 38: Intervalllöschfunktion
- 39: Intervallhinzufügemenü
- 40: Hinzufügeschaltfläche
- 41: Intervalllöschmenü
- 42: Löschschaltfläche
- 43: Pfeiltaste
- 44: Temperaturanwahlmenü
- 45: Statusleiste

## Patentansprüche

1. Steuereinheit (2) zur zeitabhängigen Steuerung einer Heizungs- und/oder Klimaanlage mit mindestens einer Eingabeeinheit (8) und mindestens einer Ausgabeeinheit (8), wobei wenigstens eine Eingabeeinheit ein Schaltintervalleingabemittel zur Hinzufügung, Änderung und/oder Löschung von zeitabhängigen Schaltintervallen aufweist, nach deren Ablauf sich jeweils ein Schaltzustand der Heizungs- und/oder Klimaanlage ändert, wobei wenigstens eine Ausgabeeinheit ein Schaltintervalldarstellungsmittel (28) aufweist, welches auf der Ausgabeeinheit zumindest zeitweise eine schematisierte, grafische Darstellung (28, 32) der zeitabhängigen Schaltintervalle darstellt, die wenigstens einen balkenartigen Darstellungsmodus (28, 32) umfasst, **dadurch gekennzeichnet, dass** wenigstens ein Schaltintervalleingabemittel als pfeilartiges Schaltintervalländerungsmittel (34) ausgebildet ist, das im Bereich von Intervallgrenzen angeordnet ist.

2. Steuereinheit nach Anspruch 1, **dadurch gekennzeichnet, dass** die grafische Darstellung (28, 32) eine Kodierung unterschiedlicher Schaltintervallzustände mittels verschiedener Farben und/oder mittels einem quer zur Zeitanzeigerichtung verlaufenden Versatz aufweist.

3. Steuereinheit nach Anspruch 1 oder 2, **dadurch gekennzeichnet, dass** die grafische Darstellung (28, 32) die Darstellung unterschiedlicher Tage (28, 35, 32), insbesondere unterschiedlicher Wochentage umfasst.

4. Steuereinheit nach einem der Ansprüche 1 bis 3, **dadurch gekennzeichnet, dass** das Schaltintervalldarstellungsmittel wenigstens zwei unterschiedliche Darstellungsmodi umfasst, nämlich einen Übersichtsmodus (28) und einen Bearbeitungsmodus (32).

5. Steuereinheit nach Anspruch 4, **dadurch gekennzeichnet, dass** im Bearbeitungsmodus (32) ein Abfragemittel zur Bestätigung (25) bzw. zum Verwerfen (26) einer erfolgten Eingabe vorgesehen ist.

6. Steuereinheit nach einem der Ansprüche 1 bis 5, **dadurch gekennzeichnet, dass** die Eingabeeinheit ein Wochentagsauswahlmittel (35) umfasst.

7. Steuereinheit nach einem der Ansprüche 1 bis 6, **dadurch gekennzeichnet, dass** wenigstens eine Eingabeeinheit zumindest ein Schaltintervallhinzufügemittel (40) und/oder zumindest ein Zeitintervalllöschmittel (42) aufweist.

8. Steuereinheit nach einem der vorangehenden Ansprüche, **dadurch gekennzeichnet, dass** zumindest zwei unterschiedliche Temperaturniveaus (44) eingegeben werden können.

9. Steuereinheit nach einem der Ansprüche 1 bis 8, **dadurch gekennzeichnet, dass** zumindest eine Ausgabeeinheit als Matrixdisplay, insbesondere als LCD- oder TFT-Anzeige ausgebildet ist.

10. Steuereinheit nach einem der Ansprüche 1 bis 9, **dadurch gekennzeichnet, dass** wenigstens eine Eingabeeinheit und wenigstens eine Ausgabeeinheit zusammenfallen, und insbesondere als Touchscreen ausgebildet sind.

## Claims

1. Control unit (2) for time-dependent control of a heating and/or air-conditioning system with at least one input unit (8) and at least one output unit (8), at least one input comprising a switching interval input means for adding, changing and/or deleting time-dependent switching intervals, the elapse of which always involving a change of a switching state of the heating and/or air-conditioning system, and at least one output unit comprising a switching interval display means (28) that does, at least from time to time display a schematised, graphic representation (28, 32) of the time-dependent switching interval that comprises at least one beam-like representation mode (28, 32), **characterised in that** at least one switching interval input means is made as an arrow-like switching interval changing means (34) that is arranged in the area of interval limits.

2. Control unit according to claim 1, **characterised in that** the graphic representation (28, 32) comprises a coding of different switching interval states by means of different colours and/or an offset extending transversely to the time display direction.

3. Control unit according to claim 1 or 2, **characterised in that** the graphic representation (28, 32) comprises different days (28, 35, 32), in particular different weekdays.

4. Control unit according to one of the claims 1 to 3, **characterised in that** the switching interval display means comprises at least two different presentation modes, namely a survey mode 28 and a processing mode (32).

5. Control unit according to claim 4, **characterised in that** in the processing mode (32) supervision means are provided for confirming (25) or rejecting (26) an input made.

6. Control unit according to one of the claims 1 to 5, **characterised in that** the input unit has weekday selecting means (35).

7. Control unit according to one of the claims 1 to 6, **characterised in that** at least one input unit comprises at least one switching interval addition means (40) and/or at least one time interval deletion means (42).

8. Control unit according to one of the previous claims, **characterised in that** at least two different temperature levels (44) can be entered.

9. Control unit according to one of the claims 1 to 8, **characterised in that** at least one output unit is made as a matrix display, in particular as an LCD or TFT display.

10. Control unit according to one of the claims 1 to 9, **characterised in that** at least one input unit and at least one output unit coincide, in particular in the form of a touch screen.

## Revendications

1. Unité de commande (2) pour la commande en fonction du temps d'une installation de chauffage et/ou de climatisation avec au moins une unité d'entrée (8) et au moins une unité de sortie (8), sachant qu'au moins une unité d'entrée présente un moyen d'entrée d'intervalle de commutation pour l'ajout, la modification et/ou la suppression d'intervalles de commutation en fonction du temps, à l'expiration desquels respectivement un état de commutation de l'installation de chauffage et/ou de climatisation se modifie, sachant qu'au moins une unité de sortie présente un moyen de représentation d'intervalle de commutation (28) qui représente au moins temporairement une représentation (28, 32) graphique schématisée des intervalles de commutation en fonction du temps sur l'unité de sortie, laquelle représentation comporte au moins un mode de représentation (28, 32) de type barre, **caractérisée en ce qu'**au moins un moyen d'entrée d'intervalle de commutation (34) est réalisé comme un moyen de modification d'intervalle de commutation (34) de type flèche qui est disposé dans la zone de limites d'intervalle.

2. Unité de commande selon la revendication 1, **caractérisée en ce que** la représentation graphique (28, 32) présente un codage de différents états d'intervalle de commutation à l'aide de différentes couleurs et/ou à l'aide d'un déport s'étendant transversalement au sens d'indication du temps.

3. Unité de commande selon la revendication 1 ou 2, **caractérisée en ce que** la représentation graphique (28, 32) comporte la représentation de différents jours (28, 35, 32), en particulier de différents jours de la semaine.

4. Unité de commande selon l'une quelconque des revendications 1 à 3, **caractérisée en ce que** le moyen de représentation d'intervalle de commutation comporte au moins deux modes de représentation différents, à savoir un mode d'aperçu (28) et un mode de traitement (32).

5. Unité de commande selon la revendication 4, caractérisér en ce qu'un moyen d'interrogation pour la validation (25) ou le rejet (26) d'une rentrée effectuée est prévu dans le mode de traitement (32).

6. Unité de commande selon l'une quelconque des revendications 1 à 5, **caractérisée en ce que** l'unité d'entrée comporte un moyen de sélection des jours de la semaine (35).

7. Unité de commande selon l'une quelconque des revendications 1 à 6, **caractérisée en ce qu'**au moins une unité d'entrée présente au moins un moyen d'ajout d'intervalle de commutation (40) et/ou au moins un moyen de suppression d'intervalle de commutation (42).

8. Unité de commande selon l'une quelconque des revendications précédentes, **caractérisée en ce qu'**au moins deux niveaux de température différents (44) peuvent être entrés.

9. Unité de commande selon l'une quelconque des revendications 1 à 8, **caractérisée en ce qu'**au moins une unité de sortie est réalisée comme un affichage à matrice, en particulier un affichage LCD ou TFT.

10. Unité de commande selon l'une quelconque des revendications 1 à 9, **caractérisée en ce qu'**au moins une unité d'entrée et au moins une unité de sortie coïncident et sont réalisées en particulier sous la forme d'un écran tactile.
